Europäisches Patentamt

European Patent Office

Office européen des brevets

(11) Numéro de publication: **0 120 780**
**B1**

(12) # FASCICULE DE BREVET EUROPÉEN

(45) Date de publication du fascicule du brevet: **29.06.88**

(21) Numéro de dépôt: **84400581.9**

(22) Date de dépôt: **22.03.84**

(51) Int. Cl.⁴: **A 01 F 15/10,** A 01 F 15/04

(54) Presse à piston pour formage de balles de fourrage.

(30) Priorité: **22.03.83 FR 8304635**

(43) Date de publication de la demande:
**03.10.84 Bulletin 84/40**

(45) Mention de la délivrance du brevet:
**29.06.88 Bulletin 88/26**

(84) Etats contractants désignés:
**DE GB**

(56) Documents cité:
**US-A-3 552 109**

(73) Titulaire: **RIVIERRE CASALIS, 8, rue André Dessaux, F-45400 Fleury Les Aubrais (FR)**

(72) Inventeur: **Galant, Jean- Claude, 71, Boulevard Kennedy, F-45800 Saint Jean De Braye (FR)**

(74) Mandataire: **Hirsch, Marc- Roger, Cabinet Hirsch 34 rue de Bassano, F-75008 Paris (FR)**

EP 0 120 780 B1

## Description

L'invention concerne une presse à piston pour formage de balles de balles de fourrage du type comportant un châssis formant intérieurement un canal de pressage dans lequel un piston presseur se meut d'un mouvement alternatif grâce à un vilebrequin, un orifice d'admission par lequel des charges de fourrage entrent dans le canal de pressage une conduite de chargement qui débouche dans le canal de pressage par ledit orifice, un chargeur formé de dents mobiles animées elles-aussi par un systeme vilebrequin ou équivalent monté rotatif autour d'un pivot et rattaché à articulation sur lesdites dents, de manière à ce que des extrémités libres de celles-ci, dites extrémités de travail, introduisent périodiquement dans la conduite de chargement des charges élémentaires pour les faire passer de la conduite de chargement dans le canal de pressage, ces dites dents du chargeur ayant leurs extrémités opposées à leurs extrémités de travail reliées à articulation par un axe, dit axe de commande de trajectoire du chargeur, à un palonnier, mobile, quant à lui, sur un axe fixe et entraîné en mouvement par le système d'entraînement du piston, de sorte que lesdites dents sont asservies audit système d'entraînement du piston en suivant au moins une trajectoire donnée au cours de la course complète du piston.

La publication US-A-3 552 109 décrit une presse dans laquelle une gouttière d'amenée débouche dans une chambre de pressage tandis qu'une plaque animée d'un mouvement alternatif assure le tassement des charges de fourrage véhiculées par la gouttière d'amenée sous l'action des dents d'un chargeur dont le mouvement est mécaniquement asservi au mouvement de la plaque par un système de transmission qui transforme un mouvement circulaire continu d'un arbre de commande en un mouvement circulaire alternatif de l'axe de commande du chargeur.

Dans une telle presse la phase de tassement des charges de fourrage représente une phase importante de préparation de la balle ayant une configuration et la densité désirée.

Au vu des variétés de fourrage et des formes variées des andains la plaque de la presse tasse des charges de fourrage successives dont le volume et la densité sont constantes.

L'alimentation du canal de pressage dans de telles conditions nécessite l'amenée d'une grande quantité de charges élémentaires et une course réduite de la plaque de pressage.

L'un des buts de l'invention est donc de faire pénétrer dans le canal de pressage des charges de dimensions et densités variées et d'utiliser un moyen d'amenée unique à mouvement alternatif qui introduit la charge dans le canal de pressage et dont la course modifiable est mécaniquement asservie à celle du piston de pressage afin de permettre la confection d'une balle compacte présentant sensiblement une densité uniforme.

Pour parvenir à ce résultat :
- le système vilebrequin ou équivalent entraînant le chargeur est distinct du vilebrequin de commande du piston presseur, bien que pouvant y être relié cinématiquement, et effectue au moins deux rotations au cours d'une course complète du piston presseur, de manière à ce que les dents décrivent au moins deux courbes successives durant cette course du piston, amenant par suite au moins deux charges,
- et que, dans le but d'obtenir une trajectoire différente des dents pour chaque courbe au cours de la course complète du piston, des moyens d'ajustage de ladite trajectoire sont prévus, constitués par un déplacement de l'axe de commande de trajectoire du chargeur provoqué par un maneton mobile portant ce dit axe et articulé sur le palonnier tout en étant relié par des engrenages au mouvement de ce dernier, des charges de dimensions et densités variées étant ainsi amenées à chaque course du piston.

Une autre caractéristique de l'invention consiste en un moyen de précompression du fourrage dans la conduite de chargement avant de le faire passer dans le canal de pressage en réduisant automatiquement de bas en haut la section de la conduite de chargement, à proximité de l'orifice d'admission des charges dans le canal de pressage.

Parmi d'autres caractéristiques de la presse on décrira notamment le mouvement de déplacement du piston presseur dont la cinématique se propose d'accélérer l'ouverture et la fermeture de l'orifice d'admission et d'assurer notamment un meilleur remplissage du canal de pressage.

D'autres caractéristiques et avantages de la presse ressortiront de la description d'un exemple de réalisation de celle-ci faite en référence du dessin annexé dans lequel :
- la figure 1 est une représentation schématique de la presse construite appliquant le principe de fonctionnement précité ;
- la figure 2 est une vue en coupe verticale partielle du chargeur et du système de transmission assurant la synchronisation des mouvements respectifs du piston et du chargeur au cours de la précompression d'une première charge de fourrage ;
- la figure 3 est une vue analogue à celle de la figure 2 au cours de la précompression d'une deuxième charge de fourrage ;
- la figure 4 est une vue analogue à celle de la figure 2 représentant l'introduction des charges successives dans le canal de pressage au cours du cycle de formation d'une balle ;
- la figure 5 est une rue en coupe de la partie supérieure de la conduite de chargement ;
- la figure 6 représente une coupe du piston presseur guide dans le canal de pressage par un ensemble de galets dans le plan 6 de la figure 7 ;
- la figure 7 représente l'épure représentative des déplacements du piston entre les points morts avant et arrière dans l'exemple de montage direct du piston sur le vilebrequin.

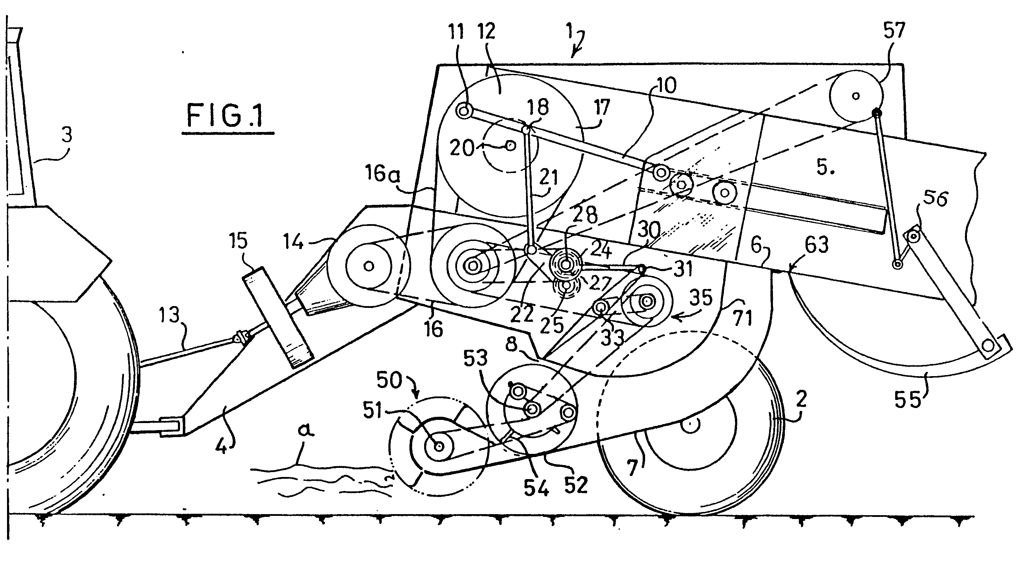

La presse à piston représentée à la figure 1 comporte un châssis 1 reposant sur le sol par l'intermédiaire de roues 2 et attelé à un tracteur 3 au moyen d'un timon d'attelage 4. Le châssis 1 comporte intérieurement un canal de pressage 5 dans lequel débouche par un orifice d'admission 6 une conduite de chargement 7. Au châssis 1 est suspendue la conduite de chargement 7 qui est incurvée vers le haut d'avant en arrière. L'extrémité inférieure d'entrée 8 de la conduite de chargement relativement éloignée de l'orifice 6 est beaucoup plus évasée que l'extrémite supérieure au contact de l'orifice d'admission 6 formant ainsi un compartiment d'alimentation en fourrage. La paroi supérieure 71 de la conduite 7 comporte sur toute sa longueur des fentes longitudinales et latéralement espacées tandis que sa partie inférieure également incurvée est pleine.

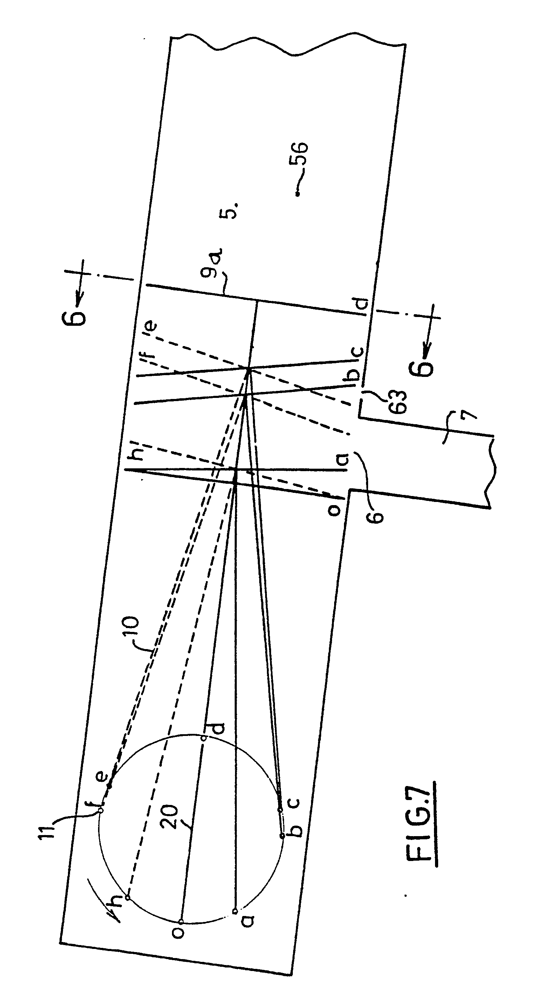

Dans le canal de pressage 5 se déplace un piston presseur 9 qui se meut d'un mouvement alternatif entre une position de point mort arrière (PMAR) à une position de point mort avant (PMAV) respectivement repérées à la figure 7. A cet effet, la partie arrière du piston 9 est rigidement reliée au moyen d'une queue d'accrochage 10 au maneton 11 d'un vilebrequin 12 dans le but de conférer à la face avant du piston des positions successives obliques au cours de son déplacement, tout en conservant des positions extrêmes perpendiculaires à la direction du déplacement aux deux positions extrêmes de point mort. Il y a toutefois lieu de remarquer qu'il est également possible d'atteler la partie arrière du piston à une bielle conventionnelle dans le but de conférer au piston un mouvement alternatif rectiligne simple. Cette solution est illustrée à la figure 1.

Le mouvement circulaire continu du vilebrequin 12 est commandé à partir de l'arbre de prise de force du tracteur par un arbre de transmission 13, un boîtier de renvoi à pignons coniques 14 équipé en amont d'un volant d'inertie 15. Le boîtier de renvoi porte un organe de sortie tel qu'une poulie à laquelle est associée une transmission qui utilise ici un ensemble de chaînes 16, 16a d'entraînement du vilebrequin 12.

La que un d'accrochage 10 ou le cas échéant la bielle principale de remplacement sont attelées à un plateau tournant 17 faisant office de vilebrequin et portant deux manetons 11, 18 inégalement espacés radialement de l'axe de rotation 20 du plateau. Le maneton 11 est destiné ainsi que cela vient d'être dit à l'actionnement de la bielle ou queue 10 tandis que le maneton 18 constitue l'axe de commande d'une bielle de renvoi 21 attelée à un palonnier 22. Le palonnier 22 est monté mobile autour d'un axe 23 fixé au châssis 1 et porte un ensemble de transmission constitué par deux pignons en prise 24, 25. Le pignon 24 est monté tournant autour de l'axe 23 tandis que le pignon 25 est monté tournant autour d'un axe 26 fixé au palonnier 22. Au pignon 25 est fixé un maneton 27 portant un axe 28 dit axe de commande de trajectoire du chargeur. L'axe 28 relie les dents du chargeur au palonnier 22 entraîné par le système d'entraînement du piston 9 de sorte que lesdites dents sont asservies à ce système d'entraînement en suivant au moins une trajectoire donnée au cours de la course complète du piston.

Le maneton 27 entraîne par l'intermédiaire de l'axe 28 un bras monté à rotation autour d'un axe 31 sur lequel sont montés une pluralité de dents 32 du chargeur 35. Les dents 32 sont suspendues sur un tube transversal 33 qui surplombe la conduite de chargement 7. Le tube 33 est rattaché à un système vilebrequin ou équivalent formé par un maneton 34 qui tourne autour d'un pivot 36 éventuellement ajustable mais fixé au châssis 1. Le système 34 porte l'axe de rotation 33 des dents 32 et l'ajustement de l'axe 28 assure une modification possible de la trajectoire A de l'extrémité de travail des dents 32 au cours de la rotation des manetons 27 et 34. Il faut cependant remarquer qu'un résultat analogue peut être obtenu par suite d'un ajustement du pivot 36.

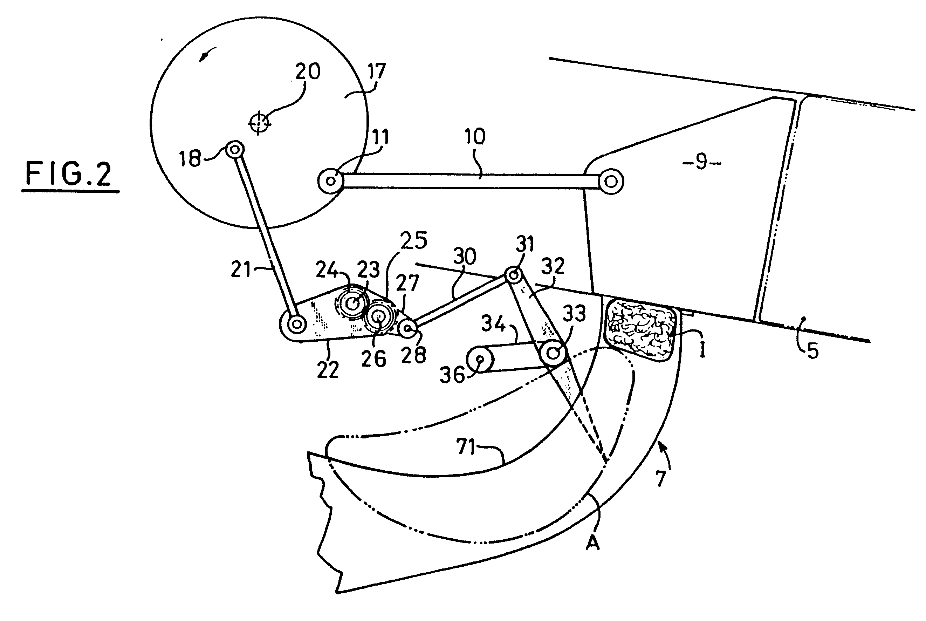

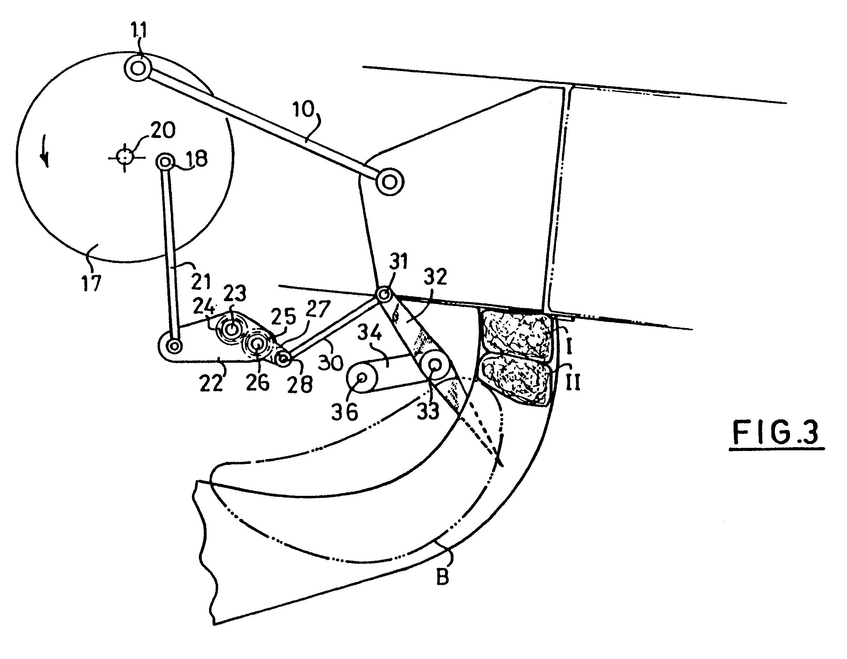

L'ensemble des dents 32 constitue de cette manière une fourche de chargement engagée dans les fentes de passage correspondantes de la paroi 71 du conduit de chargement 7 et assure la formation et l'accumulation des charges élémentaires de fourrage I, II telles que représentée aux figures 2, 3.

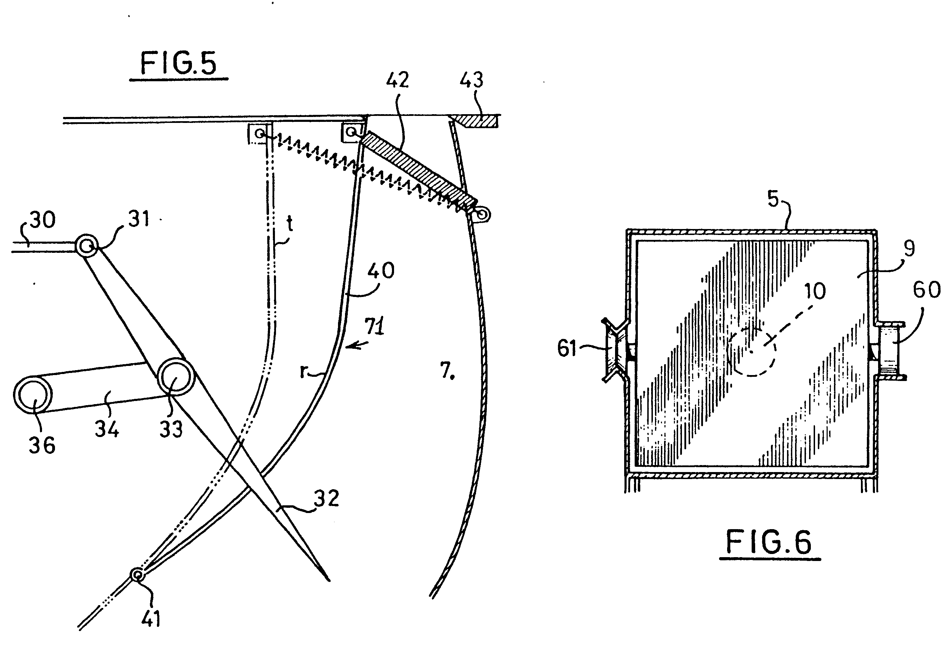

Les dents 32 sont ainsi destinées à pousser périodiquement dans le canal de pressage 5 un ensemble de charges élémentaires I, II, III préalablement accumulées dans la partie supérieure du conduit 7. En référence à la figure 5, on voit que les fentes longitudinales de la paroi 71 séparent entre elles une succession de lames 40 constitutives de l'extrémité haute de la paroi 71 respectivement articulées autour d'un même axe 41 et susceptibles de s'écarter de la position de repos r à une position de travail t à l'encontre d'un effort antagoniste exercé par des ressorts latéraux 42. L'ensemble des lames 40 constitutives de la partie haute de la conduite de chargement 7 peut être entraîné dans sa partie haute directement par le piston presseur 9, de sorte que la section de la partie haute de la conduite soit asservie à la course du piston. La section de la partie supérieure de la conduite de chargement 7 peut ainsi être modifiée de manière à réaliser un moyen de précompression et de laminage dans cette même conduite des charges successives de fourrage avant l'introduction de celles-ci dans le canal de pressage 5. Cette manière de procéder régularise le débit dans l'orifice d'admission 6 et assure l'alimentation du canal de pressage au contact de la totalité de la face avant du piston 9.

Dans le but de faciliter la séparation des charges déjà contenues dans le canal de pressage 5 et des charges en formation dans la conduite de chargement 7, la face inférieure du canal 5 porte un couteau 43 dont la longueur de coupe correspond à la dimension de l'orifice d'admission 6 et qui sectionne la charge introduite dans le canal de pressage à chaque déplacement vers l'avant du piston 9.

Le compartiment d'alimentation en fourrage situé à l'extrémité inférieure d'entrée 8 de la conduite de chargement 7 est situé à proximité d'un organe de ramassage 50, cet organe monté rotatif autour d'un axe 51 pouvant avoir une structure à dents capables de ramasser le fourrage disposé en andains "a" sur le sol au cours de l'avancement de la presse. Le fourrage levé par les dents de l'organe de ramassage est chassé dans un convoyeur à vis d'Archimède 52 qui réduit la largeur de l'andain "a" à la largeur de la conduite de chargement 7. Le convoyeur à vis 52 tournant autour d'un axe 53 en sens inverse de celui de l'organe 50 peut être muni de dents escamotables 54.

La presse précitée comporte par ailleurs un mécanisme de ficelage représenté schématiquement par un ensemble d'aiguilles 55 dont le mouvement est synchronisé avec celui de noueurs 57. Il est évident que ce mécanisme est étranger avec le principe de fonctionnement de la presse et que tout autre mécanisme de ficelage convenable pourra être choisi.

Le presse précitée fonctionne de la manière suivante :

Au cours de l'avancement de la presse, l'organe de ramassage 50 soulève les andains "a" et les fait passer vers l'arrière au contact du convoyeur 52 et dans la conduite de chargement 7. Les dents 32 du chargeur 35 montées à rotation autour de l'axe commun 33 sont entraînées par le maneton de commande 34 et décrivent une courbe A en forme de haricot déterminée par la position relative de l'axe 28 et du pivot 36. La forme de la courbe A peut donc être modifiée soit par le déplacement de l'axe 28 sur le maneton 27, soit par le déplacement du pivot 36. Dans l'exemple illustré par les figures 2, 3, 4 on réalise le déplacement de l'axe 28, ce qui explique qu'au cours d'une course complète du piston presseur 9, les dents 32 du chargeur décrivent trois courbes différentes A, B, C. Le préréglage des différents manetons 11, 18, 34 permet par exemple d'obtenir une vitesse de rotation du maneton 34 autour du pivot 36, trois fois supérieure de celle du maneton 11 autour de l'axe 20 du vilebrequin 12.

A ce stade de la description, il semble important d'expliciter certaines caractéristiques importantes de la presse. Il faut d'abord souligner que le déplacement de l'axe 28 peut être asservi à une commande hydraulique ou électronique. De ce fait, on a utilisé dans la description le terme général de transmission qui lie les déplacements simultanés du piston 9 et du chargeur 35.

L'axe 28 est monté sur un maneton 27 monté à rotation autour de l'axe 26. Ceci explique que les positions de l'axe 28 et de l'axe 23 peuvent être confondues ainsi que représente à la figure 1 ou décalées sous l'action du déplacement communiqué par la bielle de renvoi 21.

Au cours de la première rotation du chargeur 35 (figure 2) le piston presseur 9 se déplace vers la position de point mort avant et sa face inférieure ferme l'orifice d'admission 6. La bielle de renvoi 21 modifie l'orientation du palonnier 22 sur son axe 23. Le déplacement angulaire de l'axe 26 du pignon 25 autour de l'axe 23, assure l'engrènement des pignons 24, 25 et la transmission du mouvement à l'axe 28 solidaire du pignon 25 par le maneton 27.

Les extrémités des dents 32 du chargeur 35 décrivent alors la courbe A et transportent la charge élémentaire I prélevée en sortie du du convoyeur à vis 52 à la partie supérieure de la conduite de chargement 7. Une précompression de la charge est réalisée conjointement par l'action des dents du chargeur et des lames articulées 40 constitutives de la partie haute de la paroi 71 de la conduite de chargement.

Au cours de la deuxième rotation du chargeur 35 (figure 3), le piston presseur 9 amorce son mouvement de recul mais sa face inférieure recouvre toujours l'orifice d'admission 6. Le palonnier 22 et l'axe 28 se déplacent comme il vient d'être dit en référence à la figure 2 à l'aide du système de transmission précèdemment décrit. Les extrémités des dents 32 du chargeur 35 décrivent alors la courbe B et transportent une nouvelle charge élémentaire II prélevée en sortie du convoyeur à vis 52 qui est maintenant précomprimée conjointement avec la première charge I.

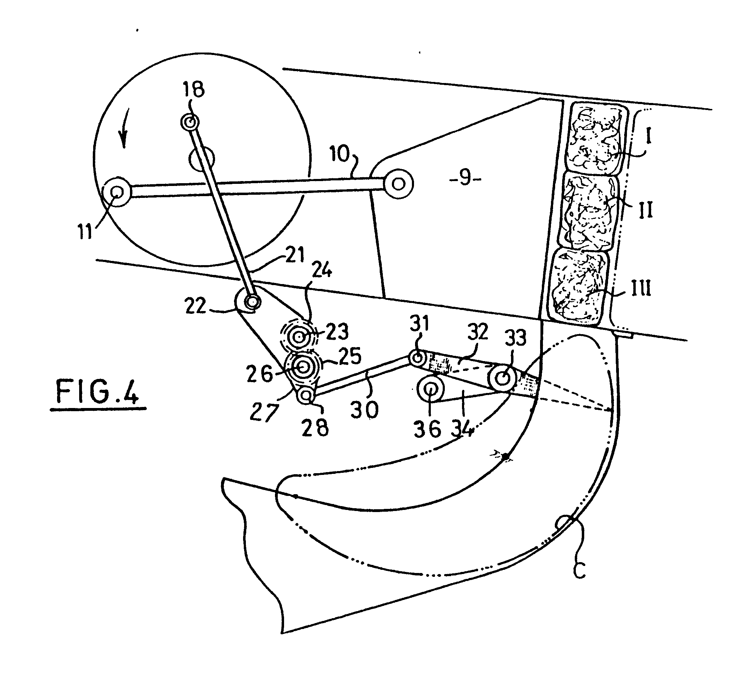

Au cours de la troisième rotation du chargeur 35 (figure 4), le piston presseur 9 continue son mouvement de recul et sa face inférieure découvre l'orifice d'admission 6. Le palonnier 22 et l'axe 28 sont de nouveau déplacés sous l'action du système de transmission.

Les extrémités des dents 32 du chargeur décrivent alors la courbe C et transportent une nouvelle charge élémentaire III derrière les charges I, II précédentes. Les trois charges sont introduites dans le canal de pressage 5.

Les trois courbes A, B, C décrites sont consécutives aux déplacements de l'axe 28 autour de l'axe 26 du pignon 25 et ce même axe 26 décrit une trajectoire circulaire autour de l'axe de rotation 23 du palonnier 22.

Il y a lieu de noter que l'axe 26 qui supporte le maneton 27 porteur de l'axe 28 tourne conjointement avec le maneton 34 porteur de l'axe de rotation 33 des dents 32 du chargeur. Le trajectoire de l'axe 28 pourra également être modifiée par suite d'un ajustement des côtes d'implantation des axes 23, 26, et du pivot 36.

Dans l'exemple précité les dents du chargeur 35 décrivent trois courbes différentes dont la forme est déterminée par construction à partir des dimensions des organes cinématiques de la transmission qui relie le piston presseur au chargeur. Il est cependant évident que ni le nombre de courtes telles que A.B.C. ni leur forme ne saurait être limité par l'exemple de la presse décrit et qu'il suffira par exemple de modifier le rapport des vitesses de rotation des manetons 11, 34 et la position de réglage de organes de la transmission pour augmenter leur nombre et pour modifier la forme de ces courbes.

Dans la presse réalisée conformément aux figures 1 à 5, le piston presseur 9 est guidé latéralement dans le canal de pressage 5 par des galets dans le but d'obtenir un déplacement du piston au cours duquel la face avant de celui-ci reste parallèle à elle-même.

Lorsque la balle formée atteint la dimension requise, les aiguilles 55 articulées autour d'un axe 56, sont introduites dans le canal de pressage 5 par des fentes 63 près de la face avant du piston. Selon un mode de construction connu, la face avant du piston porte à cet effet des passages des différentes aiguilles.

Dans le but d'assurer notamnent un meilleur remplissage du canal de pressage 5, et une ouverture et fermeture rapides de l'orifice d'admission 6, il est ici proposé d'adjoindre au piston presseur 9 un guidage simplifié. A cet effet, la face arrière du piston est solidaire d'une queue rigide 10 accrochée au maneton 11 du vilebrequin 12. Le moyen de guidage latéral de chaque face du piston est limitée à un seu lorgane 60, 61 dans le but d'autoriser des oscillations du piston autour d'un axe horiontal passant respectivement par un galet de guidage 61 et un galet de soutien 60 oui constituent les moyens de guidage du piston en association avec des pistes de roulement réglables prévues sur les faces latérales opposées du canal de pressage 5 et avec les logements dce organes 60, 61.

La face avant 9a du piston presseur occupe conformément à la figure 7, au cours d'une rotation du maneton 11, des positions successives obliques par rapport au fond du canal de pressage 5 et des positions perpendiculaires audit fond lorsque le piston occupe les positions de point mort avant et de point mort arrière.

Les avantages supplémentaires obtenus par le mode de guidage simplifié du piston 9 réside dans le fait que l'obliquité de la face avant au cours de la phase de compression réduit sensiblement les efforts sur le maneton 11. Il y a également lieu de noter que l'inclinaison de la face avant du piston est favorable à une meilleure protection des aiguilles 55 dès leur introduction dans le canal de pressage 5 en les préservant des chocs é\u0301ventuels contre le piston.

Ces caractéristiques parmi d'autres qui n'ont sans doute pas été spécialement soulignées dans la description de la presse et de son mode de fonctionnement, permettent la fabrication de balles de fourrage relativement compactes dont la masse volumique est sensiblement constante.

## Revendications

1. Presse à piston pour formage de balles de fourrage du type comportant un châssis (1) formant intérieurement un canal de pressage (5) dans lequel un piston presseur (9) se meut d'un mouvement alternatif grâce à un vilebrequin (12), un orifice d'admission (6) par lequel des charges de fourrage entrent dans le canal de pressage (5), une conduite de chargement (7) qui débouche dans le canal de pressage (5) par ledit orifice (6), un chargeur (35) formé de dents (32) mobiles animées elles-aussi par un système vilebrequin ou équivalent (34) monté rotatif autour d'un pivot (36) et rattaché à articulation sur lesdites dents (32), de manière à ce que des extrémités libres de celles-ci, dites extrémités de travail, introduisent périodiquement dans la conduite de chargement (7) des charges élémentaires pour les faire passer de la conduite de chargement (7) dans le canal de pressage (5), ces dites dents (32) du chargeur ayant leurs extrémités opposées à leurs extrémités de travail, reliées à articulation par un axe (28), dit axe de commande de trajectoire du chargeur, à un palonnier (22), mobile, quant à lui, sur un axe fixe (23) et entraîné par le système d'entraînement du piston, de sorte que lesdites dents sont asservies audit système d'entraînement du piston en suivant au moins une trajectoire donnée au cours de la course complète du piston, caractérisée en ce que :
   -le système vilebrequin ou équivalent (34) entraînant le chargeur (35) est distinct du vilebrequin (12) de commande du piston presseur (9), bien que pouvant y être relié cinématiquement, et effectue au moins deux rotations au cours d'une course complète du piston presseur, de manière à ce que les dents décrivent au moins deux courbes successives durant cette course du piston, amenant par suite au moins deux charges,
   - et en ce que, dans le but d'obtenir une trajectoire différente des dents (32) pour chaque courbe au cours de la course complète du piston, des moyens d'ajustage de ladite trajectoire sont prévus, constitués par un déplacement de l'axe (28) de commande de trajectoire du chargeur provoqué par un maneton (27) mobile portant ce dit axe (28) et articulé sur le palonnier (22) tout en étant relié par des engrenages (24, 25) au mouvement de ce dernier,des charges de dimensions et densités variées étant ainsi amenées à chaque course du piston.

2. Presse de formage selon la revendication 1, caractérisée par le fait que le pivot (36) du système d'entraînement (34) du chargeur (35) est associé à des moyens de réglage de la trajectoire des dents (32) dudit chargeur (35).

3. Presse de formage selon la revendication 1, dans laquelle le système d'entraînement du piston presseur (9) est composé d'une queue (10) associée au maneton d'articulation (18) d'une bielle de renvoi (21) du palonnier (22) mobile autour de l'axe fixe déjà mentionné (23), fixé au châssis, caractérisée par le fait que la modification de trajectoire des dents (32) du chargeur est réalisée par un bras (30) à partir du maneton (27) porteur de l'axe (28) de commande de trajectoire du chargeur (35).

4. Presse de formage selon l'une quelconque des revendications 1 ou 3, caractérisée par le fait que le piston presseur (9) est associé à un organe de guidage (60, 61) disposé entre le piston et deux parois opposées du canal de pressage, coopérant à l'oscillation de la face avant du piston.

5. Presse de formage selon la revendication 1, caractérisée par le fait que la conduite de chargement (7) porte un moyen de précompression et de laminage des charges de fourrage.

## Patentansprüche

1. Kolbenpresse zur Ausbildung von Futterballen mit einem Gehäuse (1), dessen Inneres einen Preßkanal (5) bildet, in dem ein Preßkolben (9) unter der Einwirkung einer Kurbelwelle (12) eine Hin- und Herbewegung ausführt, mit einer Einlaßöffnung (6) zur Zufuhr von Futtergutmengen in den Preßkanal (5), mit einem Zufuhrkanal (7), der über die Öffnung (6) im Preßkanal (5) mündet, mit einem aus beweglichen Zähnen (32) gebildeten Förderer (35), wobei die Zähne ebenfalls durch eine Kurbelwellenanordnung (34) oder dgl. angetrieben werden, die um einen Zapfen (36) drehbar angeordnet ist und gelenkig mit den Zähnen (32) derart verbunden ist, daß deren freie Enden, die Antriebsenden, periodisch in den Zufuhrkanal (7) und in elementare Futtergutmengen eingreifen, um sie vom Zufuhrkanal (7) in den Preßkanal (5) zu befördern, während die den Arbeitsenden gegenüberliegenden Enden der Zähne (32) des Förderers gelenkig mittels einer Achse (28), der Bewegungssteuerachse für den Förderer, mit einem beweglichen Hebel (22) verbunden sind, der an einer feststehenden Achse (23) angeordnet ist und von der Antriebsanordnung für den Kolben derart antreibbar ist, daß die Zähne von der Antriebsanordnung für den Kolben steuerbar sind, so daß sie wenigstens einem vorgegebenen Weg folgen, während eines vollständigen Umlaufes des Kolbens, dadurch gekennzeichnet, daß
- die Kurbelwellenanordnung (34) oder dgl. zum Antrieb des Förderers (35) getrennt von der Kurbelwelle (12) zur Steuerung des Preßkolbens (9) ist, jedoch mit dieser kinematisch verbunden sein kann und wenigstens zwei Umdrehungen während eines vollständigen Umlaufs des Preßkolbens derart ausführt, daß die Zähne wenigstens zwei aufeinanderfolgende Kurven während dieses Kolbenumlaufs durchlaufen und demzufolge wenigstens zwei Futtergutmengen mitnehmen und
- daß zum Zwecke des Erzielens eines unterschiedlichen Weges der Zähne (32) für jede Kurve während des vollständigen Kolbenumlaufs eine Regelanordnung für diesen Weg vorgesehen ist mittels Verschiebens der Bewegungssteuerachse (28) des Förderers durch einen beweglichen diese Achse (28) tragenden Kurbelzapfen (27), der am Hebel (22) angelenkt ist gleichzeitig mit einem Getriebe (24, 25) zu dessen Bewegung verbunden ist, so daß Futtermengen unterschiedlicher Abmessungen und Dichten während eines jeden Kolbenumlaufs zugeführt werden.

2. Presse nach Anspruch 1, dadurch gekennzeichnet, daß der Zapfen (36) der Antriebsanordnung (34) des Förderers (35) einer Steueranordnung für den Weg der Zähne (32) des Förderers (35) zugeordnet ist.

3. Presse nach Anspruch 1, in der die Antriebsanordnung für den Preßkolben (9) aus einem Endstück (10) besteht, das mit einem gelenkigen Kurbelzapfen (18) einer Rückholpleuelstange (21) des Hebels (22) verbunden ist, der um die bereits erwähnte feststehende Achse (23) beweglich ist, welche am Gehäuse befestigt ist, dadurch gekennzeichnet, daß die Veränderung des Weges der Zähne (32) des Förderers durch einen Arm (30) erfolgt, ausgehend vom Kurbelzapfen (27), der die Bewegungssteuerachse (28) des Förderers (35) trägt.

4. Presse nach einem der Ansprüche 1 oder 3, dadurch gekennzeichnet, daß der Preßkolben (9) mit einem Führungsteil (60, 61) verbunden ist, das zwischen den Kolben und zwei gegenüberliegenden Wänden des Preßkanals angeordnet ist, und während der Oszillationsbewegung mit der Vorderseite des Kolbens zusammenwirkt.

5. Presse nach Anspruch 1, dadurch gekennzeichnet, daß der Zufuhrkanal (7) eine Anordnung zur Vorverdichtung und zum Walzen der Futtergutmengen trägt.

## Claims

1. A piston press for forming bales of forage of the type comprising a chassis (1) which internally forms a pressing passage (5) in which a pressing piston (9) moves with an alternating movement by means of a crankshaft (12), an intake orifice (6) by way of which charges of forage pass into the pressing passage (5), a charging conduit (7) which opens into the pressing passage (5) by way of said orifice (6), a charging means (35) formed by movable teeth (32) which are also driven by a crankshaft system or equilvalent (34) mounted rotatably about a pivot (36) and pivotally connected to said teeth (32) in such a way that free ends thereof, referred to as the working ends, periodically introduce elementary charges into the charging conduit (7) to cause them to pass from the charging conduit (7) into the pressing passage (5), said teeth (32) of the charging means having their ends which are opposite to their working ends pivotally connected by a shaft (28), referred to as the trajectory control shaft of the charging means, to a rocking lever (22) which is movable on a fixed shaft (23) and which is driven by the system for driving the piston, whereby said teeth are under the control of said system for driving the piston, following at least a given trajectory in the course of the complete stroke movement of the piston, characterised in that:

- the crankshaft system or equivalent (34) driving the charging means (35) is separate from the crankshaft (12) for controlling the pressing piston (9) although it can be kinematically connected thereto, and it effects at least two rotations in the course of a complete stroke movement of the pressing piston in such a way that the teeth describe at least two successive curves during said stroke movement of the piston, consequently feeding at least two charges,

- and that, in order to produce a different trajectory for the teeth (32) for each curve in the course of the complete stroke movement of the piston, there are provided means for adjusting said trajectory, formed by displacement of the trajectory control shaft (28) of the charging means produced by a movable crank (27) carrying said shaft (28) and pivoted to the rocking lever (22) while being connected by gears (24, 25) to the movement of the latter, charges of varying dimensions and densities thus being supplied in each stroke movement of the piston.

2. A forming pressing according to claim 1 characterised in that the pivot (36) of the drive system (34) of the charging means (35) is associated with means for regulating the trajectory of the teeth (32) of said charging means (35).

3. A forming press according to claim 1 wherein the system for driving the pressing piston (9) is composed of a rod (10) associated with a pivot crank (18) of a return link (21) of the rocking lever (22) which is movable about the above-mentioned fixed shaft which is fixed to the chassis, characterised in that the modification in trajectory of the teeth (32) of the charging means is produced by an arm (30) from the crank (27) carrying the trajectory control shaft (28) of the charging means (35).

4. A forming press according to either one of claims 1 or 3 characterised in that the pressing piston (9) is associated with a guide member (60, 61) disposed between the piston and two opposite walls of the pressing passage, cooperating in oscillation of the front face of the piston.

5. A forming press according to claim 1 characterised in that the charging conduit (7) comprises a means for precompression and rolling of the forage charges.

FIG.1

FIG.2

FIG.3

0 120 780

FIG.4

# FIG.5

# FIG.6

0 120 780

FIG.7

56

9a   5.

0 120 780